# EUROPEAN PATENT APPLICATION

(11) **EP 1 431 873 A1**
(43) Date of publication of application: **23.06.2004**
(21) Application number: 02354195.6
(22) Date of filing: 19.12.2002
(51) Int. Cl.: G06F 9/44

(54) **Computer programming**

(71) Applicant: Hewlett-Packard Company, A Delaware Corporation, Palo Alto, CA 94304 (US)
(72) Inventor: Dumont, Dominique, 38320 Eybens (FR)
(74) Representative: Lloyd, Richard Graham

(57) **Abstract**

According to one aspect of the present invention, there is provided a method, within an object-oriented computer program, of creating a dependency between a first class and an element of a second class in a hierarchical arrangement of classes created by a class-making module using declarative definitions of each class,
the method comprising:
defining, within the first class definition,
   position information defining the relative position within the hierarchy of the element of the second class, and
   rule information defining the nature of the dependency; and
incorporating functionality within the first class to interpret the rule and position information to create the dependency.

## Description

The present invention relates to computer programming and, more particular, to computer programming techniques for use in conjunction with a declarative approach to defining classes.

Many modern day computer-based systems are both complex in nature and are highly configurable enabling such systems to be specifically tailored for the differing requirements of individual users. In many systems, such is the level of complexity surrounding the way in which such systems may be configured it is becoming increasingly difficult for users to comprehend and fully understand the full range of configuration options available to them. Consequently, many computer-based systems may be less than optimally configured which means that important functions or aspects, which producers of such systems often go to great lengths to develop, may be seldom used or not used in the intended manner.

Computers, computer operating systems, web servers and telecommunications systems are just a few examples of such systems.

Many of these computer-based systems use configuration files, often in human readable form, which provide configuration parameters for different system elements, and which are used during initialization of the system to configure the appropriate system elements with the appropriate configuration parameters. For complex systems the configuration files may run into many thousands of lines of data describing each of the individual elements to be configured along with the data required for configuring the elements.

Systems providers often provide standard or default configuration files which may be used to provide a 'typical' system configuration. Such default configuration files are generally not, however, optimized for any particular user. Thus, generally speaking, the user is required to make modifications to the configuration files to ensure that the systems are suitably configured for their particular requirements. For example, to ensure optimum performance, a computer operating system may need to be configured for the particular type of computer hardware used to run the operating system. Although manual editing of a configuration file with, for example, a text editor is generally possible, it typically requires a thorough understanding of the changes being made and the possible implications that a modification to one system element may have on another system element. Since the configuration files are only generally used during the initialization of a system, any errors or inaccuracies which are introduced will usually only be noticed when the system is initialized. Any such problems may cause the system to fail to initialize or may result in an incorrectly configured system. In such cases, the configuration file may require re-editing and the system re-initializing. Such a process can be time-consuming and particularly frustrating for the system administrator.

To help overcome these problems, it is known to use computer programs to assist in the creation or modification of configuration files. Such computer programs model the configuration behavior of the system to be configured and may provide a degree of checking and validation which aim to help prevent erroneous or incorrect configuration parameters from being stored in the configuration file. Once the configuration parameters have been entered using the computer program, a configuration file may be created or modified. Webmin (available through http://webmin.com) is an example of one such computer assisted configuration file creation tool which is used for creating/modifying configuration files for Unix systems. Other examples include Linuxconf (http://www.solucorp.qc.ca/linuxconf/), used for creating and managing Linux configuration files, and Swat, which is a web administration tool for Samba.

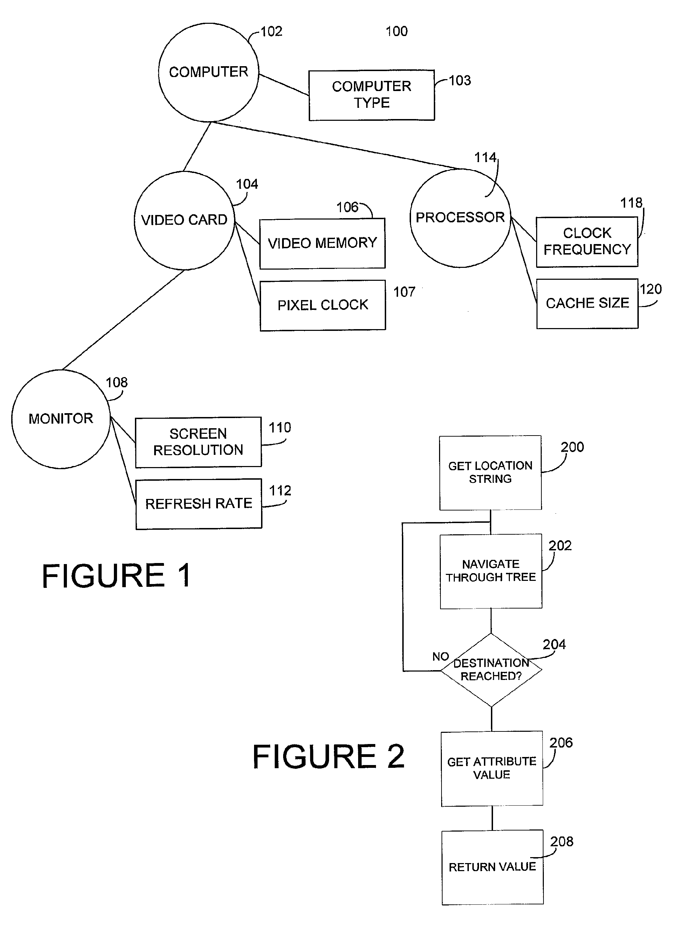

Many systems requiring configuration may be represented using a hierarchical tree-like structure (hereinafter referred to as a configuration tree), as shown in Figure 1, wherein system elements are represented by 'nodes' of the tree and attributes of the system elements are represented by 'leaves' of the tree. In such trees a node may typically be connected to other nodes, but a leaf may typically only be connected to a single node.

Figure 1 shows part of a configuration tree representation 100 of a simple computer system. A computer 102 has a number of system elements: a video card, node 104; a monitor, node 108; and a processor, node 114. The computer node 102 has an attribute of computer type, 103, video card has an attribute of video memory, leaf 106, and pixel clock, leaf 107, the monitor has attributes of screen resolution, leaf 110, and refresh rate, leaf 112, and the processor has attributes of clock frequency, leaf 118, and cache size, leaf 120.

A computer program used to assist in the creation/modification of a configuration file can model the configuration behavior of each system element, for example, by modeling any particular requirements such as limits on the values an attribute may take, the type of attribute and so on. Although there exist many different programming techniques by which this may be achieved, it will be generally appreciated that the techniques of so-called object oriented programming are particularly suited.

Object oriented programming broadly involves modeling system elements, or the nodes of the tree, as software objects, and representing the attributes of the system elements, or leaves of the tree, as attributes of the software objects. A software object provides containers for storing data (i.e. the attributes) and methods for accessing, modifying and storing the data. Software objects are generally created from a class definition which acts as a generic blueprint or template for a software object and defines the nature of the data containers and methods. The numerous benefits and advantages of object-oriented programming will be well appreciated by those skilled in the art.

In order to implement a computer program for modeling the configuration behavior of the various system elements, a class must typically be written for each system element. A class, as is well known in the art, defines, amongst other things, the name of the class, the attributes of each class and methods which enable the attributes to be accessed and modified, known as accessor methods. A certain degree of 'intelligence' may be built into the accessor methods to provide functionality such as range and type checking of attributes.

In some situations system elements may have dependencies which need to be modeled by the computer program. For example, the parameters of a modem may have to change depending on the geographical location of the computer. Thus, if the geographical location is represented by an attribute of a class, the attributes of a modem class may be need to change accordingly is the geographical location attribute changes.

Such behavior dependencies can be provided by hard-coding the dependency information in each of the appropriate classes and by linking attributes of one class with attributes of another. However, this can lead to program code which is cumbersome and hence lead to increased maintenance difficulties. Additionally, should any of the dependencies change, this will generally require modification of each of the classes concerned. Furthermore, a configuration system with a large number of system elements will generally require the computer program to have a large number of classes. In many cases, however, many of the classes will be similar in nature which can lead to the class definition section of the computer program being long and repetitive in nature.

One way of reducing the coding effort required is to define the properties of each class using a declarative description, and to use a generic class-making module for creating class implementations using the class declaration. This is particularly useful where many similar but different classes are required, as is often the case when modeling configuration trees.

In the Perl programming language, for example, there exist a number of generic class-making routines such as the Class::Struct module, which forms part of the standard Perl distribution, and the well-known Class::MethodMaker module which is available through the comprehensive Pearl archive network (CPAN) at http://www.cpan.org. Class::MethodMaker may be thought of as a function which takes input parameters which define the nature of the data containers (or attributes) and the class accessor methods for each class, and which creates a class implementation based on those input parameters.

A computer program written using such techniques therefore comprises two principle sections: a first section containing the class declarations that define the class implementations which will be created at run-time; and a second section containing program code which will create the configuration model in, for example, the memory of a computer, by referencing the class implementations created at run-time by the class-making module or, alternatively, by calling the classes through the methods created at run-time.

In this way, the classes may be defined in a simple and concise declarative manner which often helps in facilitating the initial writing of the code as well as improving the maintainability of the code.

However, such a declarative approach does not enable dependencies between classes or attributes (other than those inherent in the tree structure due to the hierarchical structure) to be defined.

Accordingly, one aim of the present invention is to overcome at least some of the above-mentioned problems by providing a framework which enables dependency information to be easily defined using a declarative approach to class definition.

According to a first embodiment of the present invention, there is provided a method, within an object-oriented computer program, of creating a dependency between a first class and an element of a second class in a hierarchical arrangement of classes created by a class-making module using declarative definitions of each class. The method comprises defining, within the first class definition, position information defining the relative position within the hierarchy of the element of the second class, and rule information defining the nature of the dependency; and incorporating functionality within the first class to interpret the rule and position information to create the dependency.

In one embodiment, where the element of the second class is an attribute, and the rule and position information is associated with an attribute of the first class, the incorporated functionality is arranged for performing the steps of: obtaining the value of the attribute of the second class using the position information; and determining a value of the attribute of the first class by using the obtained value and the rule information.

Suitably, the step of obtaining the value of the attribute of the second class may further comprise: interpreting the position information to extract the relative location of the second class; and retrieving the reference to the second class by recursively navigating the hierarchical arrangement of classes in accordance with the interpreted position information.

The step of obtaining the value may further comprise registering, with the second class, the rule information and a reference to the attribute of the first class such that an accessor method used to interrogate the attribute of the second class modifies, by way of the registered reference, the attribute of the first class by applying the registered rule information in association with the attribute of the second class.

Preferably the incorporated functionality within the first class is provided through one or more external classes having functionality for interpreting the position and rule information.

In a second embodiment, where the element of the second class is an attribute, and where the rule information defines the creation of an object from a choice of classes based on the value of the attribute, the method may further comprise obtaining the value of the attribute of the second class using the position information; and creating a new object in accordance with the obtained value and the rule information.

The method may further comprise creating a hidden object intermediate a first object created from the first class and the new object for regulating access to the first object.

The step of obtaining the value may further comprise registering, with the second class, a reference to the hidden object and the rule information such that an accessor method used to interrogate the attribute of the second class may cause the hidden object to create a further new object, and hence to prevent access to the previous created object, in accordance with the rule information.

Where a further new object is created, the method may further comprise copying attribute values from the previous created object to the further new object on a best-effort basis.

The step of obtaining the value of the attribute of the second class may further comprise interpreting the position information to extract the relative location of the second class; and retrieving the reference to the second class by recursively navigating the hierarchical arrangement of classes in accordance with the interpreted position information.

The computer program may be written in the Perl language, in which case the class-making module may be the Class::MethodMaker module.

Additionally, each class declaration may additionally include a privilege level identifier associated with each attribute thereof. In this case the method may further comprise comparing the privilege level identifier with a predetermined user associated privilege level and only allowing access to that attribute if the user privilege level is at least as high.

In a further embodiment, there is provided a method, within an object-oriented computer program, of creating a dependency between a first class and an element of a second class in a hierarchical arrangement of classes created by a class-making module based on declarative definitions of each class. The method may comprise defining, within the first class definition, position information defining the relative position within the hierarchy of the element of the second class, and rule information defining the nature of the dependency; such that an accessor method created for accessing the attribute of the first class is arranged for: obtaining the value of the attribute of the second class; and modifying the attribute of the first class in accordance with the value of the attribute of the second class and the information contained in the second information item.

The invention will now be described, by way of non-limiting example, with reference to the accompanying diagrams, in which:
Figure 1 is a diagram showing a configuration tree representation of a simple computer system;
Figure 2 is a flow diagram outlining the main functional steps of a tree navigation function according to an embodiment;
Figure 3 is a diagram showing an extract of the configuration tree of Figure 1;
Figure 4 is a diagram showing an expanded extract of the configuration tree of Figure 1;
Figure 5a is a flow diagram outlining the main functional steps for implementing a value dependency according to an embodiment;
Figure 5b is a flow diagram outlining the main functional steps for accessing a value which has dependencies according to an embodiment;
Figure 6 is a flow diagram outlining the main functional steps for implementing a value dependency using a Perl-type implementation; and
Figure 7 is a flow diagram outlining the main functional steps for implementing an object dependency using a Perl-type implementation.

Referring again to Figure 1, there is shown an example computer system made up of the following nodes: a computer 102, a video card 104, a monitor 108, and a processor 114. The computer node 102 has an attribute of computer type, 103, video card has attributes of video memory, 106, and pixel clock, 107, the monitor has attributes of screen resolution, 110, and refresh rate, 112, and the processor has attributes of clock frequency, 118, and cache size, 120. Each of the attributes and nodes may have an associated behavior. For example, the computer type attribute 103 may be limited to taking a value of 'laptop' or 'desktop', the attribute clock frequency 116 may have maximum and minimum values and so on.

As previously described, one way to create a computer program to model the configuration behavior of a system is to use an object oriented approach and to define classes which model the behavior of each of the system elements.

Using a generic class-making module, for example such as the Perl Class::MethodMaker module, the various classes required for modeling the configuration behavior of the different system elements may be declared as shown below. For ease of explanation the tabulated views, below, outline the nature of each class, and the pseudo-code representations outline an example high-level implementation of the class which may be implemented in a number of different programming languages.

### COMPUTER CLASS - TABULATED VIEW

| CLASS NAME: Computer | | |
|---|---|---|
| ATTRIBUTES | Type | Comments |
| computer_type | enum | Choice: 'Laptop', 'Desktop' |
| video_card | VideoCard | |
| Processor | Processor | |

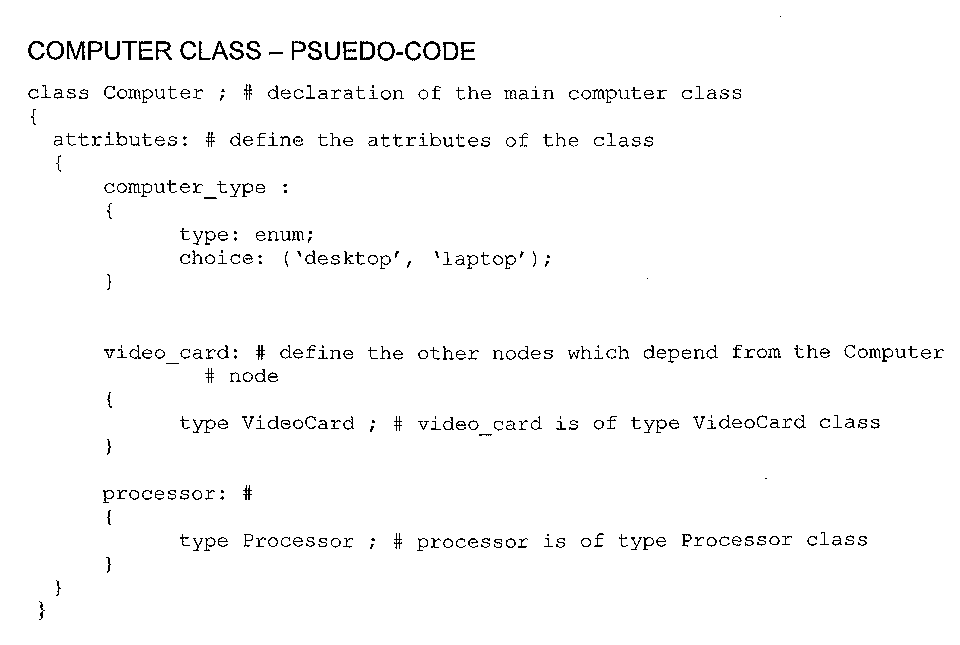

### VIDEO CARD CLASS - TABULATED VIEW

| CLASS NAME: VideoCard | | |
|---|---|---|
| ATTRIBUTES | Type | Comments |
| video_memory | Enum | Choice: '1MB','2MB','4MB' |
| pixel clock | integer | |
| display | Monitor | |

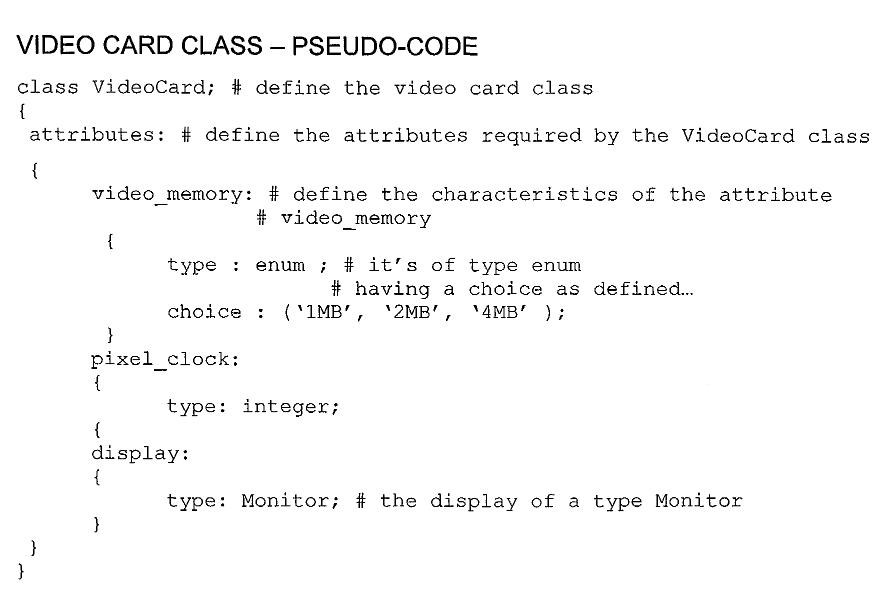

### MONITOR CLASS - TABULATED VIEW

| CLASS NAME: Monitor | | |
|---|---|---|
| ATTRIBUTES | Type | Comments |
| screen_resolution | Integer | |
| refresh_rate | Integer | |

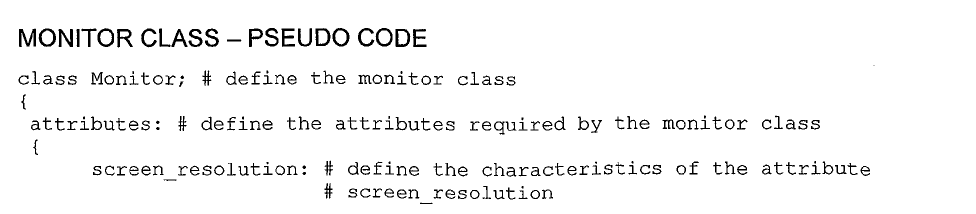

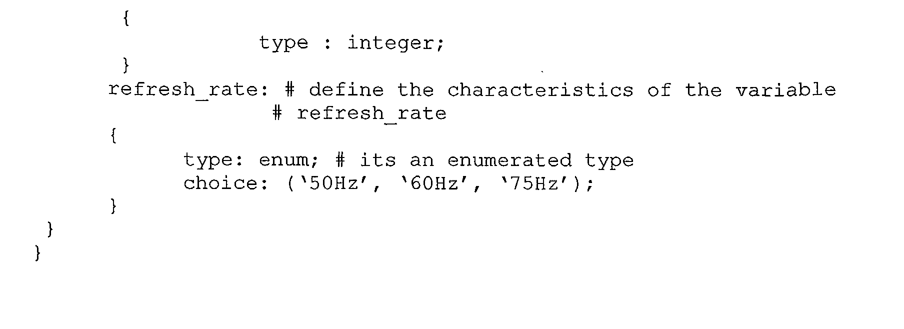

### PROCESSOR CLASS - TABULATED VIEW

| CLASS NAME: Processor | | |
|---|---|---|
| ATTRIBUTES | Type : | |
| clock_frequency | integer | min=50, max=200 |
| cache_size | enum | Choice: '256b','512b','1024b' |

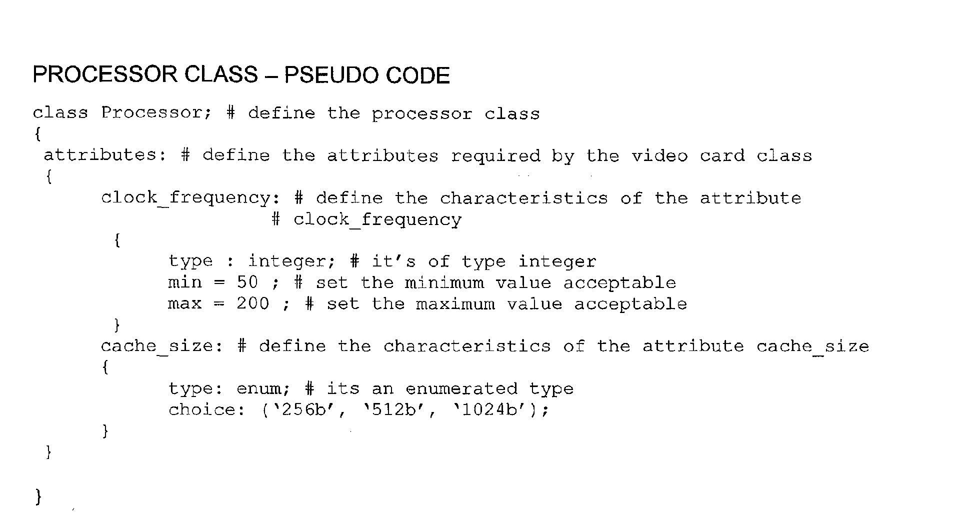

In a Perl-type implementation the class implementations defined using the declarative class definitions above are created at run-time by the class-making module. A main program creates the configuration model in memory by creating instances (or objects) of the class implementations. The main program may, for example, implement a user interface allowing users to read, set or modify attributes of each object making up the configuration model. It will be appreciated that the main program may also use classes defined in a more conventional, non-declarative, manner.

As previously described, the use of generic class-making modules along with declarative class definitions has currently been limited for use where there are no dependencies between nodes or leaves of a configuration tree. The present invention helps to overcome such disadvantages by providing a framework through which dependency information may defined in a declarative manner and thereby be used with a generic class-making module.

One of the problems of using generic class-making modules, such as Class::MethodMaker, is that referencing of objects arranged in a hierarchical tree-like structure becomes difficult, due partly to the fact that instances of the class implementations are created only at run-time. Class::MethodMaker, goes some way to help this by providing a way to obtain a reference to the parent object of a given object. By itself however, this is of limited value.

In one embodiment of the present invention a mechanism is provided which enables a hierarchical tree of objects to be navigated through by making use of functionality provided by Class::MethodMaker, as described below.

This navigation functionality may be provided, for example, through a tree navigation class which provides a method which accepts as an input string the relative location of an attribute in a hierarchical arrangement (or tree) of objects. For example, referring back to Figure 1, suppose that the refresh rate attribute 112 of the monitor object 108 is dependent of the pixel clock attribute 107 of the video card object 104. From within the monitor class declaration, a string is defined giving the relative position within the tree of the pixel clock attribute 107. For convenience, such a string may use notation similar to that well known from Unix and MS-DOS file systems. For example the string:
..\..\video_memory
may be used to indicate that the parameter video memory is found in the object 'two levels up' from the current object. The first level up being the monitor object 108 and the second level up being the video card object 104

Similarly, the string:
..\..\..\processor\cache_size
may be used to indicate that the parameter cache_size is an attribute of the processor object which is located 'three levels up' from the current monitor object and 'in the processor object'.

An embodiment of this tree navigation functionality is shown in flow diagram form in Figure 2. The first step 200, is to obtain the string defining the location of the required attribute and to parse the string to extract the path information and the attribute required. Hereinafter, the required attribute is referred to as a warp master value. Using the tree navigation function the tree of objects may be 'navigated', steps 202 and 204, until the required object is reached. When the destination object is reached, the required warp master value is obtained, step 206, and the warp master value is returned to the requesting object, step 208.

Additional dependency functionality between classes may be built on top of the tree navigation function, as will be described further below.

Embodiments of the present invention provide for a declarative manner for defining three main types of dependency relationship, as will be described below. The first dependency type is where an attribute of one class (the warp value) is dependent on the value of an attribute in another class (the warp master value). The nature of this dependency is such that should the warp master value change, the warp value is automatically updated.

An embodiment outlining the mechanisms by which the warp value dependency may be implemented will now be described below.

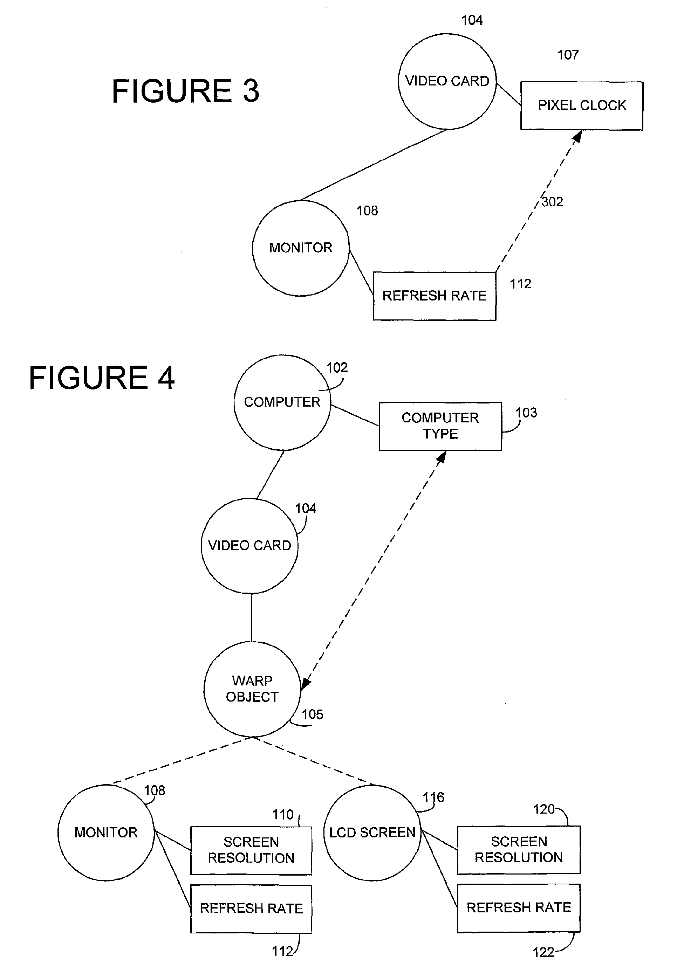

Figure 3 is a diagram showing an extract of the configuration tree shown in Figure 1. The dotted line 302 indicates that the attribute refresh rate, 112, (the warp value) of the monitor object 108 is dependent on the attribute pixel clock, 107, (the warp master value) of the video card object 104. In order to define the nature of the dependency it is necessary to define the relative location of the warp master value, and the rule (hereinafter referred to as the warp rule) to be applied to the warp value. For this example, assume that the relationship between the refresh rate and the pixel clock attribute is defined as: if the pixel clock value is greater than 100Mhz, then the maximum refresh rate is 50Hz, if the pixel clock value is greater than 200Mhz then the maximum refresh rate is 60 Hz, and if the pixel clock value is greater than 300Mhz then the maximum refresh rate is 70Hz.

As previously described, the warp master value may be defined as:
..\..\pixel_clock

The warp rule may, for example, be expressed as:

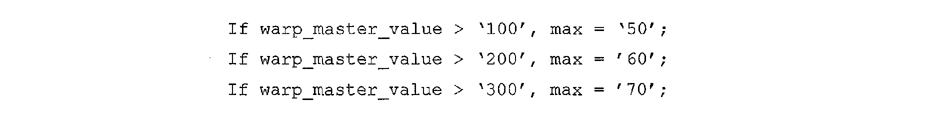

A warp value attribute therefore has additional associated information which defines the location (the warp master value) and the nature of (the warp rule) the dependency. One way in which this dependency information can be associated with an attribute is to declare the attribute as of an object type having appropriate data containers and accessor methods for implementing the required functionality. For example, below is shown an example Value class which may be used for this purpose:

### VALUE CLASS - TABULATED VIEW

| CLASS NAME: Value | | |
|---|---|---|
| ATTRIBUTES | Type | Comments |
| name | created depending on type specified | |
| min | Integer | |
| max | Integer | |
| warp_master_value | String | |
| warp_rule | String | |

Thus, an attribute of type Value has data containers for holding, amongst others, the name and type (e.g. integer, enum etc.), any maximum or minimum values, and any associated warp information. The accessor methods provided by the Value class may use this information, for example, for ensuring that an attribute value is within the limits defined by the maximum and minimum values. Similarly, the Value class accessor methods also provide the required functionality to interpret a warp rule from a string and to transform this into the correct processing steps as defined by the warp rule. In this way, much of the complex functionality may be hidden from the user, for example, by the Value object. For clarity, the following examples do not show each attribute as being of a type Value, although it will be appreciated that any attribute having associated warp information may advantageously be declared as so.

It should be noted that the Value class itself may not necessarily be created by a class-making module, and is preferably defined using conventional techniques.

The class declaration for the Monitor class may thus be expressed as:

### MONITOR CLASS - TABULATED VIEW

| CLASS NAME: Monitor | | |
|---|---|---|
| ATTRIBUTES | Type | Comments |
| screen_resolution | integer | |
| refresh_rate | Value | integer warp_master_value: ..\..\pixel_clock warp_rule: If warp_master_value > '100', max = '50'; If warp_master_value > '200', max = '60'; If warp_master_value > '300', max = '70'; |

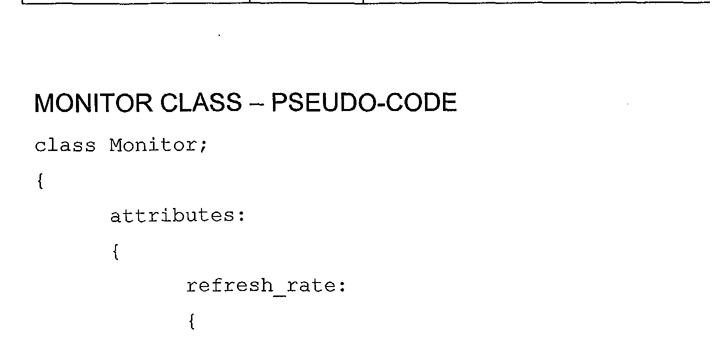

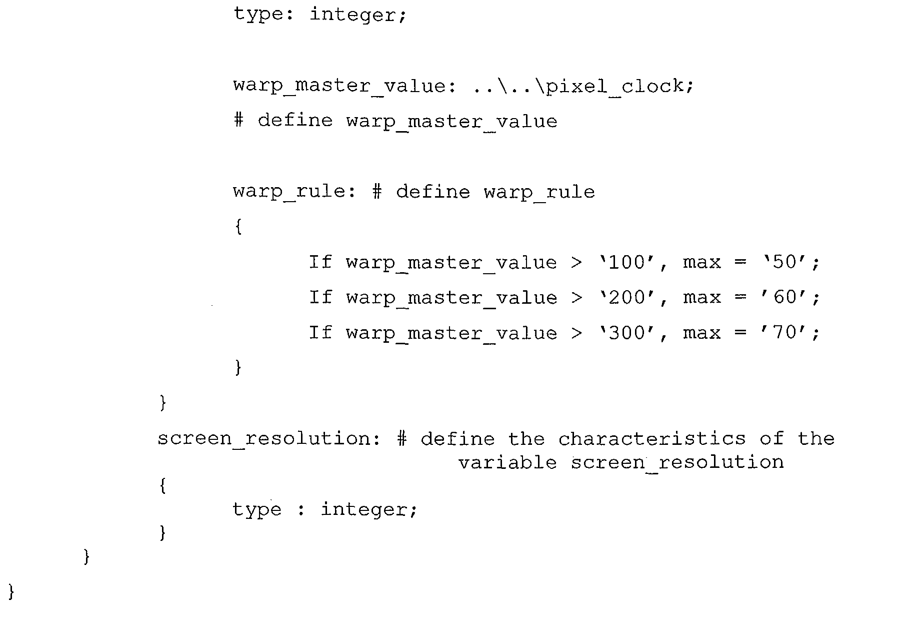

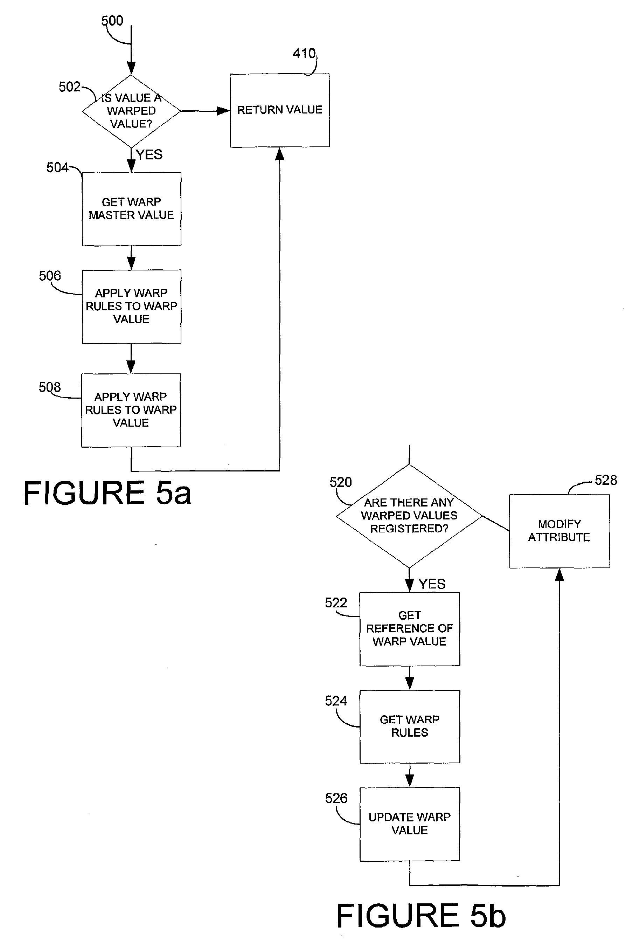

An overview of this value warp functionality is shown in Figure 5a. For example, when the accessor method used to retrieve the value of the refresh rate attribute is called (step 500), it is determined whether the attribute has any associated warp information (step 502). If there is no warp information, the value of the attribute is returned (step 510). If there is warp information available the warp master value is retrieved (504) as previously described using, for example, the tree navigation functionality. Any warp rule information is then obtained (step 506) and is applied to the warp master value (step 508). The attribute value is then returned (step 510).

To ensure that subsequent changes to the warp master value will cause a change in the warp value a registration mechanism may be used to register the reference of the warp value, along with the warp rule, with the warp master value. This may be achieved, for example, by declaring the warp master value as of a class type having appropriate data repositories and methods for interpreting and performing the required functionality. Thus, when a warp master value is interrogated, the reference to the warp value, along with any associated warp rules, are registered with the warp master value. This step may be added, for example, between the steps 504 and 506 of the flow diagram of Figure 5a.

Thus, should the warp master value be subsequently modified, the accessor methods used for modifying the warp master value will check to see whether any warp values have been registered therewith, and if so will update the registered warp value directly using the registered warp rules, as outlined in the flow diagram of Figure 5b. When the accessor method of an attribute is accessed, a check is made to determine whether there is any warp information registered with the attribute (step 520). If no such information is registered, the attribute may be modified, for example, in the usual manner (step 528). If warp information is registered, the reference of the attribute which is registered thereat is obtained (step 522), along with the warp rule (step 524) which may also have been registered. In the event that more than one warp rule has been registered the appropriate warp rule can be selected. The warp rule is then applied and the attribute which is registered is modified directly using the registered reference (step 526). Finally, the attribute within the class may be modified (step 528).

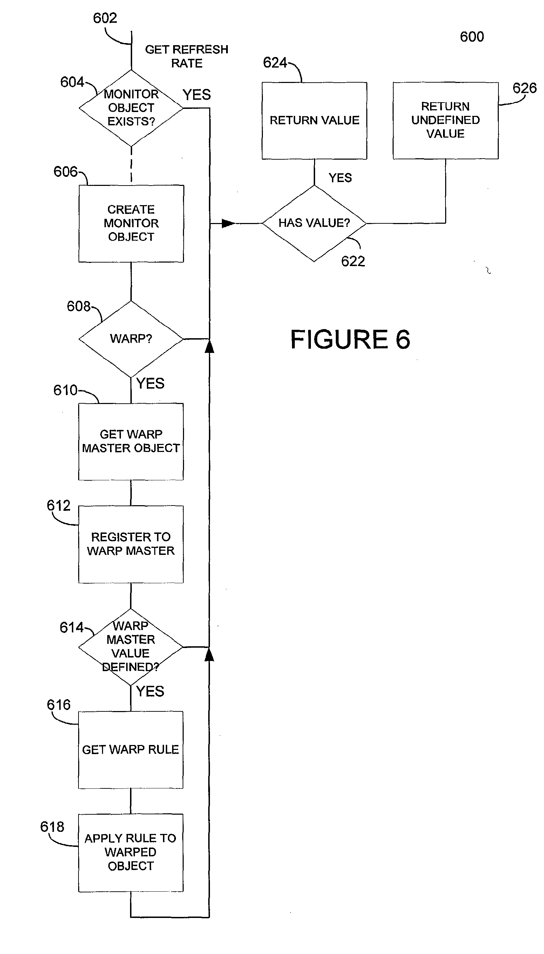

As previously mentioned, use of Class::MethodMaker in Perl causes objects which use Class::MethodMaker to be dynamically created as they are accessed. Figure 6 is a flow diagram outlining one way in which the main steps may be performed when using a Perl-type implementation for requesting a warp value from an object which has yet to be created.

The request for the value of the refresh rate attribute 112 is made through the monitor object 108, for example, by calling the appropriate accessor function. If the monitor object does not exist (step 604), then it is created (step 606). At step 608 it is determined whether the requested attribute is a warp value. If the requested attribute is a warp value, then the reference of the warp master object is retrieved (step 610) as previously described. The warp value and warp rules are registered, or stored, within the warp master object (step 612) as described above, and a check is made to see whether the warp master value exists and has been previously defined (step 614). If the warp master value has been defined, the warp rule is applied to the warp master value (steps 616 and 618) and the warp value is returned (step 624).

A second type of dependency is where a class is dependent on an attribute of another class (the warp master). For example assume that the computer type attribute 103 of the computer object 102 indicates whether the computer is a laptop or a desktop computer. A desktop computer may thus have a computer monitor, not an LCD screen, whereas a laptop computer may have an LCD screen, not a computer monitor. Thus, depending on the value of the computer type attribute 103, either a monitor object or an LCD screen object should be created to enable the correct configuration behavior to be modeled.

In an embodiment of the present invention, this functionality is implemented through use of a 'hidden' intermediate object hereinafter referred to as a warp object, as shown in Figure 4. In the present example, the warp object 105 lies intermediate the video card object 104 and a monitor or LCD screen object, 108 and 116 respectively, and effectively regulates access to the underlying objects, as will be described below. An object which depends from a warp object is herein referred to as a warped object.

A warp object may be similar in nature to the Value object described above, as shown below. Again, in order to provide the additional functionality required, the WarpObject provides additional data repositories for storing the additional information.

### WARPOBJECT CLASS - TABULATED VIEW

| CLASS NAME: WarpObject | | |
|---|---|---|
| ATTRIBUTES | Type | Comments |
| Name | created depending on type specified | |
| warp_master_value | string | |
| warp_rule | string | |

The WarpObject class, from which the WarpObject is created, has the necessary accessor methods for providing the required functionality, for example, to obtain the reference of an object from a string containing a relative location of the object (using, for example, the above-described tree navigation functionality). Similarly, the warp object accessor methods also provide the required functionality to create an object from a class depending on, for example, the value of an attribute as defined by the warp master value and the warp rule.

The class definition for the Video Card class may thus be expressed as:

### VIDEO CARD CLASS - TABULATED VIEW

| CLASS NAME: VideoCard | | |
|---|---|---|
| ATTRIBUTES : | Type : | Comments |
| video_memory | enum | Choice: '1MB','2MB','4MB' |
| pixel clock | integer | |
| display | warp_object: | warp_master_value: ..\..\computer_type; warp_rule: use class Monitor if warp_master_value = 'desktop'; use class LCD_screen if warp_master_value = 'laptop' |

The pseudo code for the VideoCard class declaration may thus be expressed as:

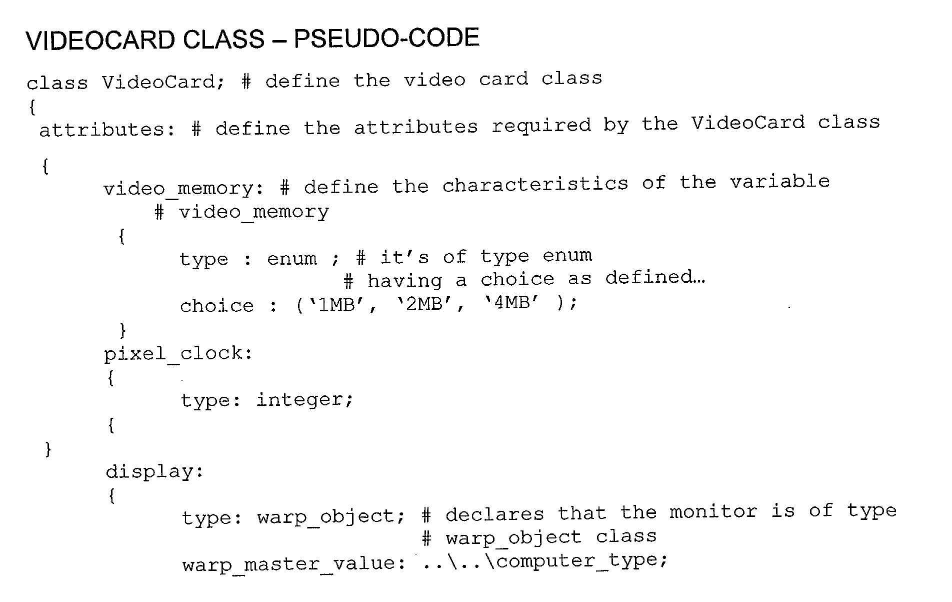

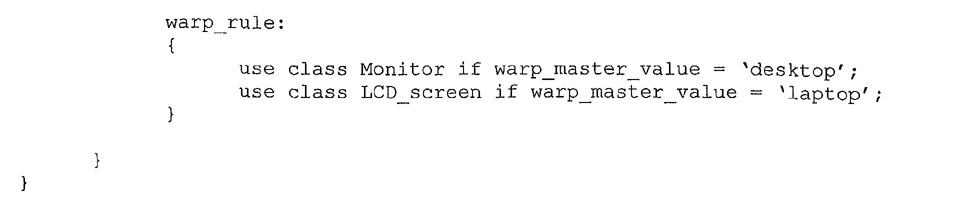

The display attribute declaration is used to create a warp object depending from the Video Card object. The warp object uses the warp master value (i.e. the computer type attribute 103) and the warp rules to determine which object (in this case a Monitor or LCD screen object) should be created depending on the value of the warp master, as illustrated in Figure 4. Through the warp object a call, for example, to set the screen resolution, will be directed to either the screen resolution attribute 110 of the monitor object or to the screen resolution attribute 120 of the LCD screen object 116, depending on which object has been created.

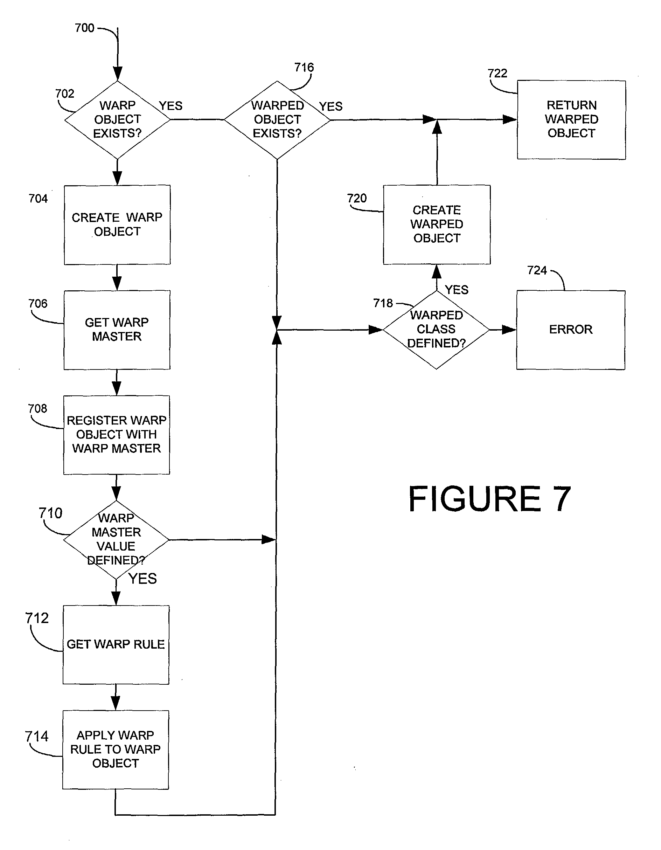

Figure 7 is a flow diagram outlining one way in which the main steps may be performed according to an embodiment, using a Pert-type implementation, for requesting the value of screen resolution (step 700). If the warp object (105) has not been created yet (step 702) it is created (step 704). The warp master value is obtained (step 706) and, for example using the previously mentioned tree navigation functionality, the reference of the warp object is registered with the warp master value (step 708). Providing that the warp master value has been defined (step 710) the warp rule is obtained (step 712) and is applied to the warp object (step 714) leading to the creation of the warped object (step 720). In the present example either a Monitor object or an LCD screen object will be created, as defined by the warp rule in accordance with the value of the computer type attribute 103. The value of the screen resolution attribute of the created warped class is then returned to the requesting function.

If the computer type attribute 103 is changed, for example from 'desktop' to 'laptop', then the warp object 105 will, using the above-described registration mechanism, create an LCD screen object 116, and all future accesses will be redirected to this object. Preferably the attribute values of the monitor object will be copied over to the LCD screen object where possible, for example using a 'best effort' copy. Any attribute values which do not exist in the LCD screen object will therefore not be copied across. Preferably the warp object 105 performs this functionality.

A third type of dependency which may exist between classes is where an attribute value of a class is dependent on one or more attributes of one or more other classes. For example, referring back to the example shown in Figure 1, it may be that the refresh rate attribute 112 is computed from the screen resolution attribute 110 and the pixel clock attribute 107. In such a case, it may not be necessary that the screen resolution attribute be automatically updated each time one of the other attributes is changed. Rather, it may be preferable that the value of the refresh rate attribute is computed each time its value is retrieved. In this case, known hereinafter as a compute value, the screen resolution attribute within the monitor class class declaration may be expressed as:

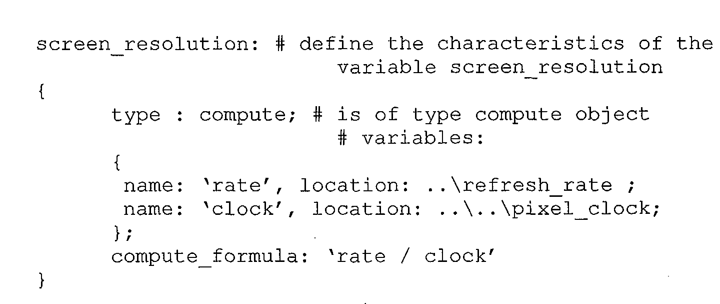

Thus, each time the accessor method is called to retrieve the value of the attribute screen_resolution, the compute object (which is the attribute type of screen_resolution) will retrieve, for example using the aforementioned tree navigation functionality, the values of the variables specified, and will apply the compute formula specified to determine the value of the attribute screen_resolution.

In a further embodiment of the present invention, each attribute in the class declaration may be assigned an identifier indicating a privilege level required in order to be able to access the attribute. This may be useful, for example, for preventing a casual user from making modifications to system critical configuration parameters by effectively 'hiding' any such attributes. For example, a number of different levels of privilege such as a 'user', 'support', 'expert', etc. may be defined. If a user is identified as a 'support' user, only attributes having a privilege level of 'user' or 'support' will be accessible. Any attempt to access attributes having a privilege level above 'support' will result in an error and will be refused.

Using the techniques described herein, a configuration model for a system can be quickly and easily implemented using, for example, declarative, rather than hard-coded, class implementations. Such a system may be used for populating the attributes of the different system elements, and ensuring that account is taken of any attributes or objects which are dependent on any other attribute or object. This may be useful, for example, by allowing a default attribute value to be specified based on the value of another attribute value.

Such a configuration tree model may be used, with an appropriate interface, to enable configuration parameters for a configuration tree to be created and verified. Such an interface may include, for example, a command line type interface in which a user enters configuration details, for example by specifying an object and an attribute value. Alternatively, an interface may be provided which reads an existing configuration file and which populates the configuration tree using the values read from the configuration file. This permits the integrity of the configuration file to be verified helping ensure the validity of the configuration parameters contained therein. Preferably, such a system enables a configuration file to be created by writing to a configuration file the attribute values associated with each object in the configuration tree.

In Perl, for example, use may be made of the built in tie mechanisms which can be used to 'hide' much of the complex functionality from the user, thereby enabling the class declarations to remain relatively simple. For example, the Perl tied mechanisms provide a convenient way of allowing the implementation and behavior of built in data types to be altered, which can be used to implement the above-described functionality without introducing unnecessary complication into the computer program.

Those skilled in the art will appreciate that the techniques described with reference to the various embodiments described above may be implemented in various different manners and in a variety of different programming languages. It will also be appreciated that one way in which the above describes techniques can be provided is in the form of an article of manufacture comprising a program storage medium having computer readable program code, for example, for use on a general purpose computer system.

## Claims

1. A method, within an object-oriented computer program, of creating a dependency between a first class and an element of a second class in a hierarchical arrangement of classes created by a class-making module using declarative definitions of each class,
the method comprising:
defining, within the first class definition,
position information defining the relative position within the hierarchy of the element of the second class, and
rule information defining the nature of the dependency; and
incorporating functionality within the first class to interpret the rule and position information to create the dependency.

2. A method according to claim 1, wherein the element of the second class is an attribute, and wherein the rule and position information is associated with an attribute of the first class, the incorporated functionality being arranged for performing the steps of:
obtaining the value of the attribute of the second class using the position information; and
determining a value of the attribute of the first class by using the obtained value and the rule information.

3. A method according to claim 2, wherein the step of obtaining the value of the attribute of the second class further comprises:
interpreting the position information to extract the relative location of the second class;
retrieving the reference to the second class by recursively navigating the hierarchical arrangement of classes in accordance with the interpreted position information .

4. A method according to claim 2 or 3, wherein the step of obtaining the value further comprises:
registering, with the second class, the rule information and a reference to the attribute of the first class such that an accessor method used to interrogate the attribute of the second class modifies, by way of the registered reference, the attribute of the first class by applying the registered rule information in association with the attribute of the second class.

5. A method according to any previous claim, wherein the incorporated functionality within the first class is provided through one or more external classes having functionality for interpreting the position and rule information.

6. A method according to claim 1, wherein the element of the second class is an attribute, and wherein the rule information defines the creation of an object from a choice of classes based on the value of the attribute,
the method further comprising:
obtaining the value of the attribute of the second class using the position information; and
creating a new object in accordance with the obtained value and the rule information.

7. A method according to claim 6, further comprising creating a hidden object intermediate a first object created from the first class and the new object for regulating access to the first object.

8. A method according to claim 6 or 7, wherein the step of obtaining the value further comprises:
registering, with the second class, a reference to the hidden object and the rule information such that an accessor method used to interrogate the attribute of the second class may cause the hidden object to create a further new object, and hence to prevent access to the previous created object, in accordance with the rule information.

9. A method according to claim 8, wherein, where a further new object is created, further comprising:
copying attribute values from the previous created object to the further new object on a best-effort basis.

10. A method according to claim 6, 7, 8 or 9, wherein the step of obtaining the value of the attribute of the second class further comprises:
interpreting the position information to extract the relative location of the second class; and
retrieving the reference to the second class by recursively navigating the hierarchical arrangement of classes in accordance with the interpreted position information.

11. A method according to any previous claim, wherein the computer program is written in the Perl language.

12. A method according to any previous claim, wherein the class-making module is the Class::MethodMaker module.

13. A method according to any previous claim, wherein each class declaration additionally includes a privilege level identifier associated with each attribute thereof, the method further comprising:
comparing the privilege level identifier with a predetermined user associated privilege level and only allowing access to that attribute if the user privilege level is at least as high.

14. A method, within an object-oriented computer program, of creating a dependency between a first class and an element of a second class in a hierarchical arrangement of classes created by a class-making module based on declarative definitions of each class,
the method comprising:
defining, within the first class definition,
position information defining the relative position within the hierarchy of the element of the second class, and
rule information defining the nature of the dependency;
such that an accessor method created for accessing the attribute of the first class is
arranged for:
obtaining the value of the attribute of the second class;
and
modifying the attribute of the first class in accordance with the value of the attribute of the second class and the information contained in the second information item.
